# EUROPEAN PATENT SPECIFICATION

(11) **EP 3 401 138 B1**
(45) Date of publication and mention of the grant of the patent: **12.08.2020**
(21) Application number: 17170211.1
(22) Date of filing: 09.05.2017
(51) Int. Cl.: B60J 1/20, B60R 5/04, B60R 21/08

(54) **LOAD COVER ARRANGEMENT**
LASTABDECKUNGSANORDNUNG
AGENCEMENT DE COUVERCLE DE CHARGE

(43) Date of publication of application: 14.11.2018
(73) Proprietor: Volvo Car Corporation, 40 531 Göteborg (SE)
(72) Inventor: Hörnström, Urban, 46144 Trollhättan (SE); Persson, Anton, 22354 Lund (SE); Köster, Albin, 23736 Bjärred (SE)
(74) Representative: Valea AB

(56) References cited:
- EP-A2- 0 240 747
- WO-A1-2015/189294
- DE-A1- 10 055 949
- US-B1- 6 216 762

## Description

### TECHNICAL FIELD

The present disclosure relates to a load cover arrangement. The disclosure further relates to a vehicle comprising the load cover arrangement.

### BACKGROUND

In some cars, e.g. station wagons, sports utility vehicles and hatchbacks, there is often an unrestricted view from the outside onto the objects in the cargo space. This is partly an aesthetic problem and partly a security problem, since it may be tempting for thieves when the objects are seen.

Conventional load cover arrangements, such as the ones described in patent documents US 5,618,077 and DE 10 2008 014 876, comprise a cassette or elongated housing arranged laterally in the front of the cargo space relative to the normal driving direction of the vehicle. The housing is usually arranged at the upper portion of the rear seats. In the housing, a winding shaft rotatably supports a web or flexible fabric which is slidably pulled rearwards to cover the cargo space as the winding shaft unwinds.

Such a conventional load cover arrangement will cover the objects in the cargo space if somebody views from the outside. However, such a conventional load cover arrangement may be in the way when objects are loaded into the cargo space of the vehicle.

Document EP 3 138 737 A1 discloses a load cover arrangement comprising a load cover having a fixed end attached to a tailgate of the vehicle, and a front portion with fastening members for releasably attaching to a front side of the cargo space. The arrangement of the load cover in the tailgate provides a storage of the load cover when it is retracted and not in use. With this configuration, the load cover follows the movement of the tailgate when it is being opened thereby giving appropriate access to the cargo space for loading of objects. However, in this position of the load cover, i.e. when the tailgate is open, the load cover obstructs the view such that the person loading the vehicle via the tailgate is unable to see into the passenger compartment.

Patent document US 6216762 B1 discloses a sun-shade device including an elongate housing formed with a slit, a roller journaled in the housing, a screen wound around the roller and having an upper edge which extends out of the housing via the slit and which is provided with a horizontal strip, a biasing member provided in the housing for biasing the roller to rotate in a direction for winding the screen on the roller, and left and right stretching arm units, each of which includes an upper arm member having an upper first end pivoted to the horizontal strip and a lower second end, and a lower arm member having an upper third end pivoted to the second end of the upper arm member, a lower fourth end, and a mounting portion formed between the third and fourth ends and mounted pivotally on the housing. A drive unit is connected to the fourth ends of the lower arm members for driving pivoting movement of the upper and lower arm members so as to stretch or retract the screen. The third end of each lower arm member is formed with a pin projection that engages an engaging groove formed in the second end of the adjacent upper arm member when the upper arm member is aligned with the lower arm member and is stretched from the lower arm member.

Patent document DE 100 55 949 A1 discloses a roller blind or screen for the rear window of a car. The roller blind or screen is wound on a shaft at one end, the other end being attached to a bar. Arms attached to this swivel to allow the blind to unroll and roll up. They are driven by electric motors fitted with angle drives.

Patent document EP 0 240 747 A1 discloses a window screen or shade, in particular for motor vehicles, including a wind-up roller biased in the wind-up direction that is rotatably journaled in a base and on which shade or screen web is secured with one end. The other edge of the web is mounted in an end rail, which is engaged by at least one extension element of an extension structure located in the vicinity of the wind-up roller, in order to unwind the web counter to the biasing of the spring mechanism for the wind-up roller. To enable dispensing with additional guide elements for the end rail, which support the window shade in the direction at right angles to the spread-open web, the extension element is substantially rigid, at least in a direction at right angles to the plane of the web defined by the extended web, and when the web is extended can move in a plane parallel to this plane of the web.

There is thus a desire for an improved load cover arrangement, which gives appropriate access to the cargo space for loading of objects and yet does not obstruct the view. Further, it is desirable that the load cover arrangement is easy to handle for the user.

### SUMMARY

The object of the present disclosure is to overcome or ameliorate at least one of the disadvantages of the prior art, or to provide a useful alternative.

The object above may be achieved by the subject-matter of claim 1. Embodiments are set forth in the appended dependent claims, in the following description and in the drawings.

Thus, the invention relates to a load cover arrangement for a cargo space of a vehicle. The load cover arrangement comprises a covering, for covering objects in the cargo space, and a take-up shaft, for receiving at least part of the covering element. The take-up shaft has a first and a second end, the second end being opposite to the first end. A proximal end portion of the covering is attached to, or attachable to, the take-up shaft. The load cover arrangement further comprises a first arm and a second arm, and a first pivot and a second pivot. Each arm has a first and a second end portion, the second end portion being opposite to the first end portion. The first end portion of the first arm is directly or indirectly connected to, or connectable to, the first end of the take-up shaft. The second end portion of the first arm is directly or indirectly connected to, or connectable to, the first pivot. The first end portion of the second arm is connected to, or connectable to, the second end of the take-up shaft. The second end portion of the second arm is connected to, or connectable to, the second pivot.

Directions as used herein, e.g. front, rear, horizontal, vertical and lateral, relate to when the load cover arrangement is mounted in a vehicle, which stands on flat ground. The load cover arrangement may further be manufactured, stored, transported and sold as a separate unit. In that case, the directions when stored, transported and sold may differ from when mounted in the vehicle.

When in use, the load cover arrangement is attached to the vehicle. One or more of the parts of the load cover arrangement may be releasable from the vehicle, e.g. to be stored in the cargo space or outside of the vehicle when not in use. Purely as an example, all parts of the load cover arrangement mentioned above, i.e. the take-up shaft, the covering, the arms and the pivots may be connected to each other and handled as a single unit, which may be releasable from the vehicle as a whole. It would also be feasible that the pivots are fixedly attached to the vehicle, but the other parts of the load cover arrangement are releasable as one unit from the vehicle.

The covering is adapted for covering objects present in the cargo space, e.g. loaded objects. Hence, the material of the covering is typically non-transparent. The covering may e.g. be made of a fabric or mesh material. Further, the covering may help to prevent objects stored in the cargo space from being thrown around in the vehicle, e.g. towards the passengers.

The first end of the take-up shaft is intended to face a first side wall of the cargo space and the second end of the take-up shaft is intended to face a second side wall of the cargo space. The take-up shaft is thus adapted to span a width from side to side of the cargo space. The diameter of the take-up shaft is typically in the range of 20-50 mm. It may be used for rolling up at least part of the covering.

The first and/or second end portion of the first and second arms may be a separate part/ separate parts attached to the first or second arm. Alternatively, the end portion or portions and the first or second arm may form a single integral unit.

According to the invention, the first and second pivots allow the first and second arms to rotate in relation to the cargo space from a first position, wherein the arms are horizontal or substantially horizontal, corresponding to a closed tailgate of the vehicle, to a second position corresponding to an open tailgate, wherein the arms have been rotated by an angle α. In order to facilitate this rotation, the pivots are attached to the vehicle, e.g. at the side walls of the cargo space. In the first position, the covering covers any objects in the cargo space. In the second position, the covering is located close to a ceiling of the vehicle and there is appropriate access to the cargo space for loading of objects, also for large objects, without removal of the load cover arrangement and yet the covering does not obstruct the view through the vehicle. The load cover arrangement according to the invention, and in particular its covering, is able to follow the displacement of the tailgate.

The length of the two arms spaces the take-up shaft and the pivots apart from each other. Thereby the attachment of the load cover arrangement to the side walls is closer to a person standing at the tailgate than for prior art load cover arrangements, which typically are attached directly behind the rear seats. Therefore the load cover arrangement according to the invention is easier to mount in the vehicle than such prior art solutions.

In the load cover arrangement according to the invention, the take-up shaft is located at a front end of the mounted load cover arrangement when in use, wherein front end is seen in relation to the vehicle. Thereby the distal end of the covering is pulled out rearwards in relation to the vehicle. Hence, when the distal end is to be attached to the vehicle, the attachment is easy to reach, since the distal end is attached to the vehicle at the tailgate.

A spring, such as a torsion spring, or preferably a respective spring for the respective pivot, may be provided for controlling the rotational position of the first and second arms in relation to the pivots and thus also in relation to the side walls of the cargo space. Preferably, the spring biases the arm to the horizontal position, thereby biasing the load cover arrangement to the first position. Further, the first and second arms may be lockable in the second position. As an option, a dampener may be provided to control the rotation movement of the arm, such that the last phase of the movement to e.g. the horizontal position is performed in a smooth way. Such dampeners are known to the skilled person from other applications, e.g. a smooth closing of a door of kitchen cupboard.

The second end portions of the first and second arms are connected to, or connectable to, the ends of the take-up shaft by means of a respective hinged connection. Thereby, the first and second arms may be transitable by means of the respective hinged connections between an operating position, in which the first and second arms are perpendicular, or substantially perpendicular, to the take-up shaft, and a storage position, in which the first and second arms are parallel, or substantially parallel, to the take-up shaft. The storage position is used when the load cover arrangement is stored. The operating position is used when mounting the load cover arrangement to the vehicle and when the load cover arrangement is utilized in the vehicle. In the operating position, the first and second pivots are parallel to the take-up shaft. In the storage position, the first and second pivots are perpendicular to the take-up shaft. The load cover arrangement may be biased to the storage position, e.g. by providing a spring, such as a torsion spring in the respective hinged connections.

The first and second arms have a respective length being in the range of from 10 cm to 70 cm, preferably in the range of from 15 cm to 60 cm, more preferably in the range of from 20 cm to 50 cm. The length may be fixed, or the first and second arms may have an adjustable length, e.g. comprising telescoping parts.

The covering may be rollable or pliable, preferably a main portion or more preferably all, or substantially all of the covering, being rollable or pliable. There is thus no stiff portion at the proximal end of the covering, i.e. at its front end. If rollable, the covering is preferably adapted to be rolled up on the take-up shaft. The take-up shaft may then operate like a roller-blind and may comprise one or more internal springs tensioning the covering when rolled out and pulling the covering back when released from the attachment to the tailgate. If pliable, the covering may be pliable like an accordion.

In case the covering is rollable, the load cover arrangement may further comprise a first end piece, located at the first end of the take-up shaft, and a second end piece, located at the second end of the take-up shaft, the take-up shaft being rotatably suspended in the first end piece and the second end piece. The first end portion of the first arm is connected to, or connectable to, the first end of the take-up shaft via the first end piece, and the first end portion of the second arm is connected to, or connectable to, the second end of the take-up shaft via the second end piece. This configuration is similar to that of a roller blind, wherein the first and second end pieces would correspond to brackets used to mount the roller-blind to a wall.

For such a load cover arrangement, the first end portion of the first arm may be hingedly connected to the first end of the take-up shaft via the first end piece with the hinged connection being located between the first end piece and the first arm. A spring, such as a torsion spring, may be located in the hinged connection, biasing the first arm to a position being parallel to the take-up shaft. Correspondingly, the first end portion of the second arm may be hingedly connected to the second end of the take-up shaft via the second end piece with the hinged connection being located between the second end piece and the second arm. A spring, such as a torsion spring, may be located in the hinge connection, biasing also the second arm to a position being parallel to the take-up shaft. Thereby the load cover arrangement is biased to its storage position.

If the covering is pliable, as described above as an alternative solution to rollable, there would be no need for a rotatable suspension of the take-up shaft. In that case, the first and second arms might be directly connected to the take-up shaft.

The load cover arrangement may further comprise a bar or an end board, wherein a distal end portion of the covering, which is opposite to the proximal end portion, is attached to, or attachable to, the bar or end board. The bar or end board may e.g. be located in a hem of the distal end portion of the covering. The bar or end board facilitates attachment to the tailgate of the vehicle. In addition, or as a complement, the bar or end board helps when pulling out the covering to reach the tailgate. Preferably the bar or end board spans the whole width of the covering.

The load cover arrangement may further comprise a second shaft being parallel to the take-up shaft and located at a centre-centre (c-c) distance d from the take-up shaft being 2 cm < d < 10 cm, preferably 3 cm < d < 9 cm , more preferably 5 cm < d < 7 cm .The second shaft may have a diameter in the range of 5-20 mm. The second shaft may help to provide stability to the load cover arrangement. Further, the second shaft may help to control the rolling out and rolling in of the covering. If utilizing the above-mentioned bar or end board at the distal end portion of the covering, the bar or end board can be configured not to be able to pass through the nip between the take-up shaft and the second shaft and will thereby control how far the covering is rolled in. Thereby, the covering can be pre-tensioned, e.g. by means of the one or more internal springs in the take-up shaft.

A handle may be attached to the underside of the covering close to its distal end portion. A ring comprised in the handle may provide a good grip for a user when pulling out the covering. As an option, the handle may be provided with a hook, which is adapted to cooperate with the second shaft. When the covering is rolled in, the hook will eventually hook on to the second shaft and will thereby control how far the covering is rolled in. Thereby, the covering can be pre-tensioned by means of the one or more internal springs in the take-up shaft.

The first pivot and the first arm may be manufactured as an integral unit and/or the second pivot and the second arm may be manufactured an integral unit. As an alternative, they may be separate parts rotatably or fixedly attached to each other. As yet an alternative, the first and/or second pivot may be attached to the cargo space of the vehicle, while the first and/or second arms may be releasable from the pivots, when the load cover arrangement is to be stored.

The pivot may comprise a rotation axis, which is connected to the second end portion of the first or second arm. The pivot may comprise an attachment portion, e.g. in the form of an attachment nut, which may have a polygonally shaped head, e.g. hexagonally shaped. The head is preferably shaped to slide easily into a pivot receptacle arranged in the side wall of the cargo space when inserted from above. The pivot receptacle is thus preferably shaped such that it allows easy insertion of the head from above, but prevents rotation of the head.

The rotation axis may be insertable into a bore in the head of the attachment portion of the pivot. The bore may be through-going, but it may as well form a cavity in the attachment portion. The cross-section of the bore may form a portion of a circle at an end portion facing away from the arm. The opening angle of this portion may be selected to correspond to a maximum rotation angle of the first and second arms. The tip portion of the rotation axis may have a flat shape to be able to control the rotation angle of the arm by being rotated within the opening angle.

In case the head of the attachment portion of the pivot is polygonal, it has a number of side surfaces. At least one of the side surfaces may be provided with a shape element, e.g. a step. The shape element helps to retain the attachment portion of the pivot in the pivot receptacle, such that the attachment portion may only be inserted into or released from the pivot receptacle in a vertical direction.

A bottom side of the head, i.e. the side facing towards the cargo space, may be provided with at least one hole for receiving one end of the torsion spring. By providing a plurality of holes, an appropriate tensioning of the torsion spring may be selected.

The load cover arrangement may comprise a first support for abutment of the first arm and/or a second support for abutment of the second arm. The abutment may e.g. support the first end portion of the first or second arm and/or the optional first or second end piece. The first and/or second support may be attachable to the side wall of cargo space. The first and/or second supports are utilized in the first position of the load cover arrangement, in which the arms are horizontal.

The invention further relates to a vehicle comprising the load cover arrangement as described herein. The cargo space comprises a side wall at either side of the cargo space and the load cover arrangement is adapted to be mounted at the side walls.

The first and/or second pivot may be fixedly attached to or comprised in the side wall of the cargo space. The cargo space may comprise a plurality of pivots at either side of the cargo space, which may be located at different vertical positions in relation to a load floor of the cargo space and/or at different longitudinal positions in the vehicle. A more frontal longitudinal position may e.g. be desirable if a rear seat of the vehicle is folded down. Different vertical positions may e.g. be desirable to adapt the load cover arrangement to the amount of cargo in the cargo space. Moreover, the location of the pivots may be adjustable e.g. by means of a rail system.

The side wall of the cargo space may comprise at least one pivot receptacle for receiving the first and/or second pivot. The pivot receptacle may be integrated with the side wall, e.g. moulded as a single unit. As an alternative, the pivot receptacle may be a separate part attached to the rest of the side wall. The pivot receptacle is utilized for load cover arrangements wherein the pivots are comprised in the releasable parts of the load cover arrangement. The cargo space may comprise a plurality of pivot receptacles at either side of the cargo space, which may be located at different vertical positions in relation to a load floor of the cargo space and/or at different longitudinal positions in the vehicle. A more frontal longitudinal position may e.g. be desirable if a rear seat of the vehicle is folded down. Different vertical positions may e.g. be desirable to adapt the load cover arrangement to the amount of cargo in the cargo space. Moreover, the location of the pivot receptacle may be adjustable e.g. by means of a rail system.

The pivot receptacle may comprise a cavity, which is open from above and from the side. A wall of the cavity may further comprise a protrusion, which cooperates with the optional shape element of the attachment portion of the pivot to retain the attachment portion in the pivot receptacle, such that the attachment portion of the pivot may only be inserted into or released from the pivot receptacle in a vertical direction.

A side wall of the cavity, or both side walls, may be shaped such that the cavity is wider as its entrance opening than at its bottom. This helps to guide the attachment portion of the pivot when mounting it. The wider entrance opening gives some tolerance when inserting the attachment portion into the cavity, while the side wall at the bottom is shaped to hold the attachment portion in a fixed way, such that it cannot rotate. Hence, the bottom of the cavity is shaped such that it has a complementary shape to that of the attachment portion of the pivot.

First and second arms with adjustable lengths, as described above, may advantageously be combined with selectable positions of the pivots and/or pivot receptacles.

The above-mentioned first support and/or a second supports may be fixedly attached to or comprised in the side wall of the cargo space. They may be integrated with the side wall, e.g. moulded as a single unit.

The tailgate of the vehicle may comprise at least one attachment for receiving the distal end portion of the covering and/or the bar or end board. If there is only one attachment, it is preferably located at such a vertical position in the closed tailgate that the covering is substantially horizontal when pulled out. If the tailgate comprises a window, this location is often below the window of the tailgate. However, there may be one or more additional attachments in the tailgate, e.g. located above the window of the tailgate. Such a position of the attachment may be beneficial if the object stored in the cargo space is very large or high.

### BRIEF DESCRIPTION OF THE DRAWINGS

The present invention will hereinafter be further explained by means of non-limiting examples with reference to the appended drawings wherein:
- Fig. 1a: is a schematic view of a load cover arrangement in a storage position.
- Fig. 1b: is a schematic view of the load cover arrangement in an operating position.
- Fig. 2: is a rear perspective view of the load cover arrangement when mounted in a vehicle with closed tailgate.
- Fig. 3: is a front perspective view of the load cover arrangement with closed tailgate.
- Fig. 4: is a front perspective view of the load cover arrangement with open tailgate.
- Fig. 5: illustrates attachment of the load cover arrangement to the tailgate in a side view.
- Fig. 6a-6e: illustrate mounting of the load cover arrangement in the vehicle.
- Fig. 7: is a schematic view of a pivot in exploded view.
- Fig. 8: is a schematic view of an attachment nut.
- Fig. 9: is a schematic view of a pivot receptacle.
- Fig. 10: is a schematic view of a handle.

It should be noted that the appended drawings are schematic and that individual components are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, as defined by the appended claims. A feature from one embodiment may be combined with one or more features of any other embodiment.

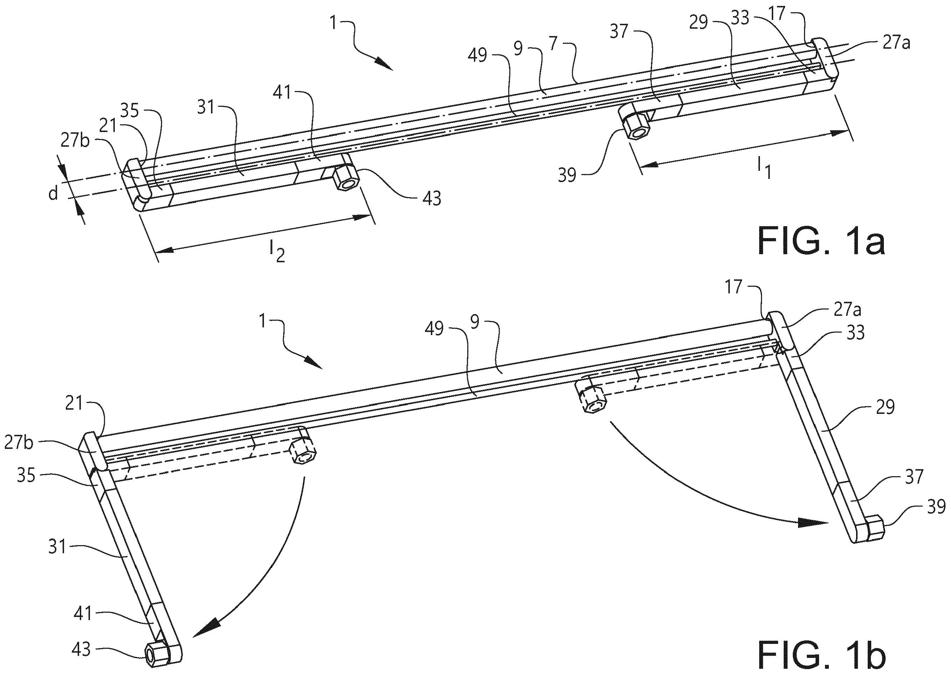

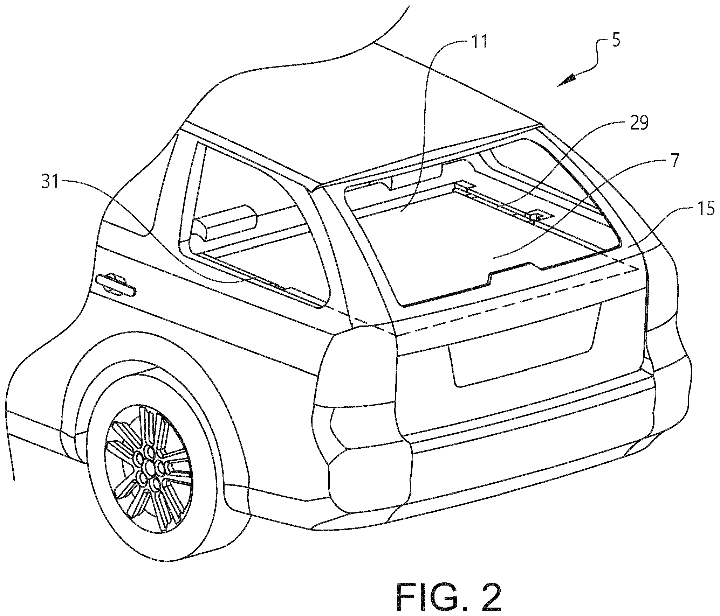

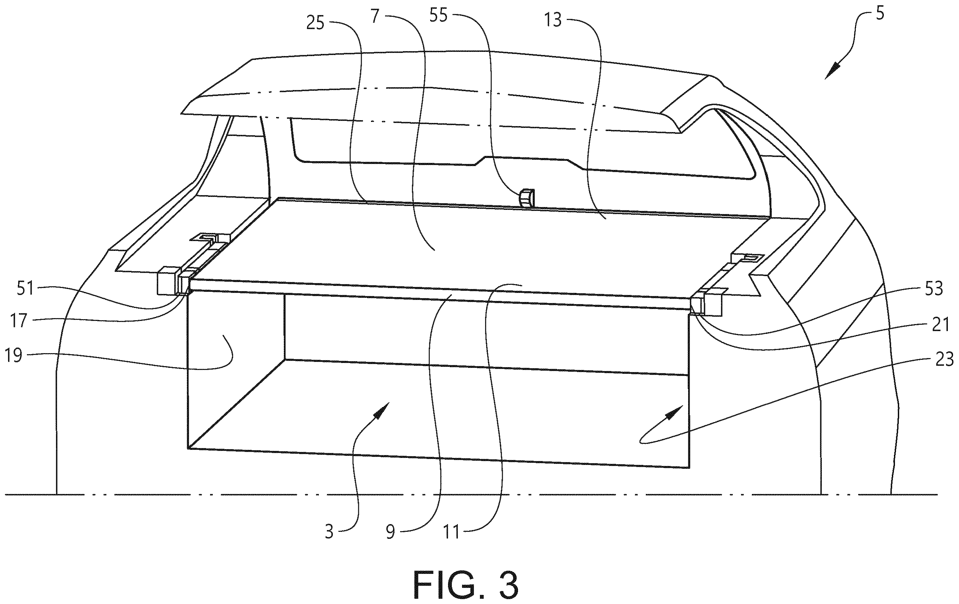

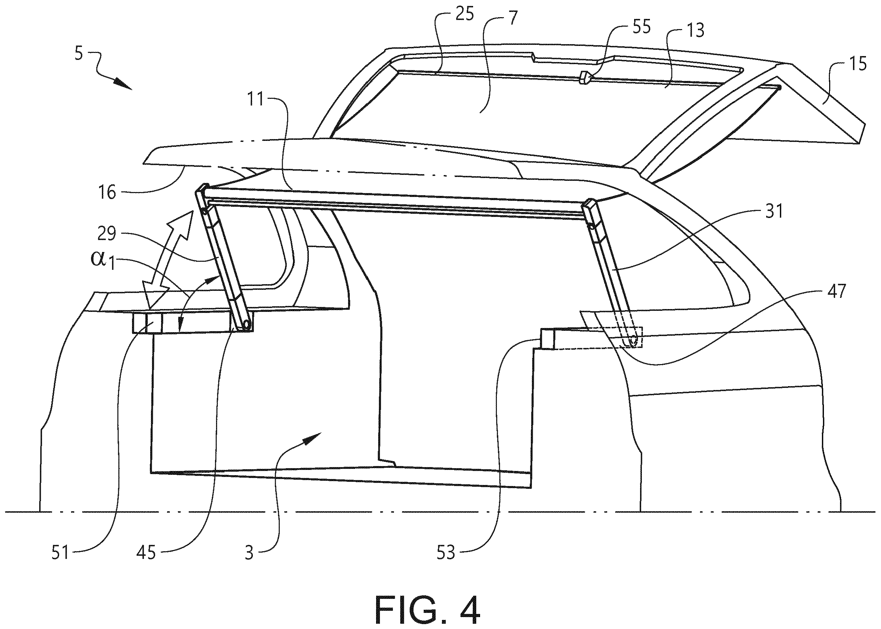

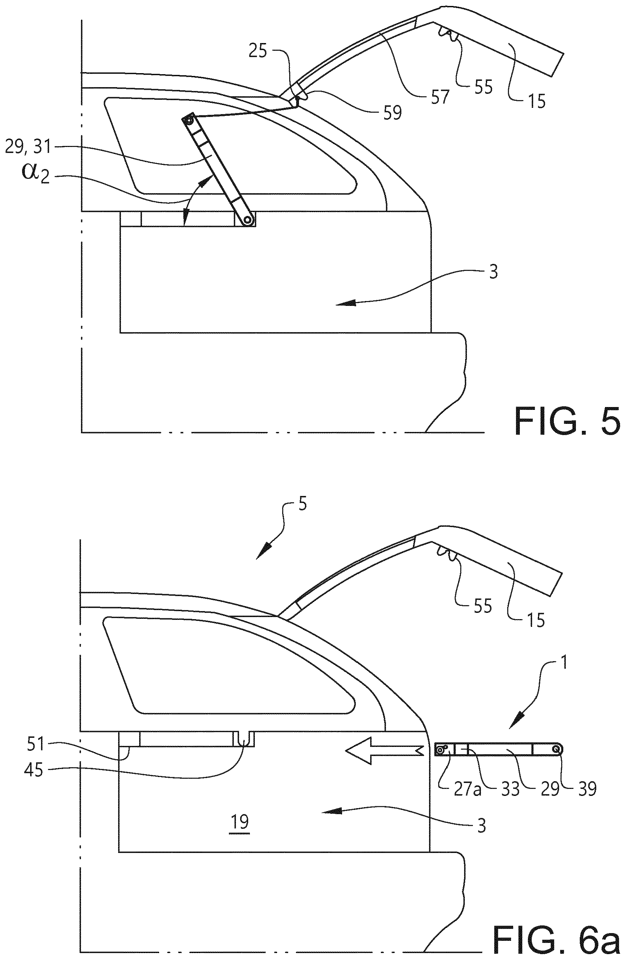

Figures 1-5 illustrate a load cover arrangement 1 for a cargo space 3 of a vehicle 5. Figures 1a and 1b illustrate the load cover arrangement 1 itself. Figures 2 and 3 illustrate the load cover arrangement 1 when mounted in the vehicle 5 with closed tailgate and Figures 4 and 5 illustrate the load cover arrangement 1 when mounted in the vehicle 5 with open tailgate.

The load cover arrangement 1 comprises a covering 7 and a take-up shaft 9. In Figures 1 and 1b, the covering 7 is rolled up on the take-up shaft 9 and in Figures 2-5, the covering 7 is at least partly rolled out. The load cover arrangement 1 is releasable from the vehicle 5 and may be stored as a separate unit, e.g. outside of the vehicle 5 or in the cargo space 3, then preferably being in the storage position.

The covering 7 is adapted for covering objects present in the cargo space 3, e.g. loaded objects, see Figures 2 and 3 illustrating the covering 7 when mounted in the cargo space 3 in a vehicle 5 with closed tailgate. A proximal end portion 11, forming a front end of the covering 7 when pulled out, is attached to the take-up shaft 9. A distal end portion 13, forming a rear end of the covering 7 opposite to the proximal end portion 11 when pulled out, is attachable to a tailgate 15 of the vehicle 5, such that when the tailgate 15 is being opened to an open position, the covering 7 is displaced together with the tailgate 15. Thereafter the covering 7 follows a ceiling 16 of the vehicle 5, see Figure 4. Hence, in the open position of the tailgate 15, there is appropriate access to the cargo space 3 of the vehicle 5. Further, there is a free view through the vehicle 5, such that a person loading the vehicle 5 from behind is able to see into a passenger compartment of the vehicle 5 and also through a windscreen of the vehicle 5.

In the illustrated embodiment, the covering 7 is rollable. The covering 7 is in Figures 1a and 1b illustrated as rolled up on the take-up shaft 9. In the rolled-up state of the covering 7, almost the whole covering 7 is located at the take-up shaft 9 with the distal end portion 13 being further away from a centre-line of the take-up shaft 9 than the proximal end portion 11. Figures 2-5 illustrate the covering 7 being at least partly rolled out from the take-up shaft 9. The covering 7 is preferably large enough to cover the whole cargo space 3. The covering 7 may e.g. be made of a fabric or mesh material. The diameter of the take-up shaft 9 is typically in the range of 20-50 mm. The take-up shaft 9 operates like a roller-blind and typically comprises one or more internal springs tensioning the covering 7 when rolled out and pulling the covering 7 back when released from the attachment to the tailgate 15.

The distal end portion 13 of the covering 7, i.e. its rear end as illustrated in Figure 3, may comprise fastening members such as loops and hooks, magnets, clamps or press-fit fastening means for attachment to the tailgate 15. As an alternative or a complement, as shown in the illustrated embodiment, the load cover arrangement 1 may comprise an elongated member, shown as a bar 25, attached along the lateral extension of the distal end portion 13 of the covering 7, which bar 25 is attachable to the tailgate 15, as is more detailedly described below in conjunction with Figure 5. The bar 25 may e.g. be located in a hem of the distal end portion 13 of the covering 7. As an alternative, not shown, an end board could be used instead of the bar 25. It would typically have a width of a few centimetres.

Going back again to Figures 1a and 1b, it may be seen that the take-up shaft 9 has a first end 17 intended to be directed towards a first side wall 19 of the cargo space 3 and a second end 21 intended to be directed towards a second side wall 23 of the cargo space 3. See also Figure 3. The take-up shaft 9 is thus adapted to span a width from side to side of the cargo space 3. The load cover arrangement 1 further comprises a first end piece 27a located at the first end 17 of the take-up shaft 9 and a second end piece 27b located at the second end 21 of the take-up shaft 9. The take-up shaft 9 is rotatably suspended in the first and second end pieces 27a, 27b, such that the take-up shaft 9 can rotate in relation to the first and second end pieces 27a, 27b in order to roll in or roll out the covering 7 in a similar way as a roller-blind.

The load cover arrangement 1 comprises a first arm 29 and a second arm 31. The first arm 29 has a first end portion 33 hingedly connected to the first end 17 of the take-up shaft 9 via the first end piece 27a with a hinged connection being located between the first end piece 27a and the first arm 29. Correspondingly, the second arm 31 has a first end portion 35 hingedly connected to the second end 21 of the take-up shaft 9 via the second end piece 27b with a hinged connection being located between the second end piece 27b and the second arm 31. Thereby, the arms 29, 31 are transitable by means of the hinged connections between a storage position, in which the arms 29, 31 are parallel, or substantially parallel, to the take-up shaft 9, see Figure 1a, and an operating position, in which the arms 29, 31 are perpendicular, or substantially perpendicular, to the take-up shaft 9, see Figure 1b. A spring, such as a torsion spring, not illustrated, may be located in the hinged connection biasing the first arm 29 to the storage position. A corresponding spring may be located in the other hinged connection, biasing also the second arm 31 to the storage position. The first 33, 35 and/or second end portion 37, 41 of the arms 29, 31 may be separate parts attached to the arm 29, 31 as is illustrated. Alternatively, one or both of the end portions may form a single integral unit with the arm.

The first arm 29 has a first length l₁, which is in the range of from 10 cm to 70 cm, preferably in the range of from 15 cm to 60 cm, more preferably in the range of from 20 cm to 50 cm. Correspondingly, the second arm 31 has a second length l₂, which is in the range of from 10 cm to 70 cm, preferably in the range of from 15 cm to 60 cm, more preferably in the range of from 20 cm to 50 cm. Preferably, the first length l₁ and the second length l₂ are equal. The lengths l₁, l₂ of the arms 29, 31 are selected such that the covering 7 may assume a position close to the ceiling 16 of the vehicle 5 when the tailgate 15 is open.

The opposite end portion of the first arm 29, i.e. its second end portion 37, is connected to a first pivot 39 and a second end portion 41 of the second arm 31 is connected to a second pivot 43. The pivots 39, 43 are rotatably connected to the arms 29, 31 and are insertable into a respective pivot receptacle 45, 47 located at the respective side walls 19, 23 of the cargo space 3, see Figure 4.

The cargo space 3 may comprise a plurality of pivot receptacles at either side of the cargo space 3, which may be located at different vertical positions in relation to a load floor of the cargo space 3 and/or at different longitudinal positions in the vehicle 5. A more frontal longitudinal position may e.g. be desirable if a rear seat of the vehicle 5 is folded down. Different vertical positions may e.g. be desirable to adapt the load cover arrangement 1 to the amount of cargo in the cargo space 3. Moreover, the location of the pivot receptacles may be adjustable e.g. by means of a rail system, not illustrated.

As an alternative, not illustrated, the pivots may be fixedly attached to the side walls 19, 23 of the vehicle 5 such that the pivots may be insertable into a respective second end portion of the arms 29, 31.

The pivots 39, 43 allow the arms 29, 31 to rotate in relation to the cargo space 3 from a first position, corresponding to a closed tailgate 15, as illustrated in Figures 2 and 3, to a second position as illustrated in Figure 4, corresponding to an open tailgate 15. The arms 29, 31 thereby rotate an angle α₁ being in the range of 30-90 degrees, preferably 45-85 degrees, more preferably 50-80 degrees. The maximum rotation may be determined by a stopper located at the pivot 39, 43 and/or in in the pivot receptacle 45, 47. The stopper may be lockable, such that the arms 29, 31 can be locked in the second position if desired. Further, the ceiling 16 of the cargo space 3 sets a practical upper limit for the rotation since the arms 29, 31 eventually would be stopped by the ceiling 16.

As an option, provided in the illustrated embodiment and best seen in Figures 1a and 1b, the load cover arrangement 1 further comprises a second shaft 49 being parallel to the take-up shaft 9. The second shaft 49 may have a diameter in the range of 5-20 mm. The second shaft 49 is located at a c-c (centre-to-centre) distance d from the take-up shaft 9, typically being in the range of 2-10 cm. The second shaft 49 extends between the first and second end pieces 27a, 27b. The second shaft 49 helps to provide stability to the load cover arrangement 1. Further, the second shaft 49 helps to control the rolling out and rolling in of the covering 7. For example, if utilizing the above-mentioned bar 25 at the distal end portion 13 of the covering 7, the bar 25 will not pass through the nip between the take-up shaft 9 and the second shaft 49 and will thereby control how far the covering 7 is rolled in. Thereby, the covering 7 can be pre-tensioned by means of the one or more internal springs in the take-up shaft 9.

A first support 51 for abutment of the first arm 29 when in the first position is arranged in the first side wall 19, which is best seen in Figure 4. Correspondingly, a second support 53 for abutment of the second arm 31 when in the first position is arranged in the second side wall 23.

The tailgate 15 may comprise at least one attachment 55 for holding the distal end portion 13 of the covering 7 and/or the bar 25. If there is only one attachment 55, it is preferably located at such a vertical position in the closed tailgate 15, such that the covering 7 is substantially horizontal, see Figure 3. If the tailgate 15 comprises a window 57, this location is often below the window 57 of the tailgate 15.

However, there may also be one or more additional attachments 59 in the tailgate 15, e.g. located above the window 57 of the tailgate 15. If utilizing the additional attachment 59, the pivots 39, 43 allow the arms 29, 31 to rotate in relation to the cargo space 3 from the first position, corresponding to a closed tailgate 15, to an alternative second position as illustrated in Figure 5, corresponding to an open tailgate 15. The arms 29, 31 thereby rotate to an angle α₂ being in the range of 30-90 degrees, preferably 45-85 degrees, more preferably 50-80 degrees. Typically, the angle α₂ of the alternative second position with the additional attachment 59 is the same as the angle α₁ of the attachment 55 below the window 57, see Figure 4. The position of the attachment, as seen along the tailgate 15, may as an alternative be adjustable, e.g. by means of a rail system, not illustrated.

Figures 6a-6e illustrate mounting of the load cover arrangement 1 in the cargo space 3 of the vehicle 5. The tailgate 15 comprising the attachment 55 is opened and the load cover arrangement 1 is entered into the cargo space 3, see Figure 6a. If utilizing the load cover arrangement 1 according to Figures 1-5, the first and second arms 29, 31 are displaced to the operating position either before or after entering the load cover arrangement 1 into the cargo space 3. In most cases, it is easiest to make the displacement outside the vehicle 5.

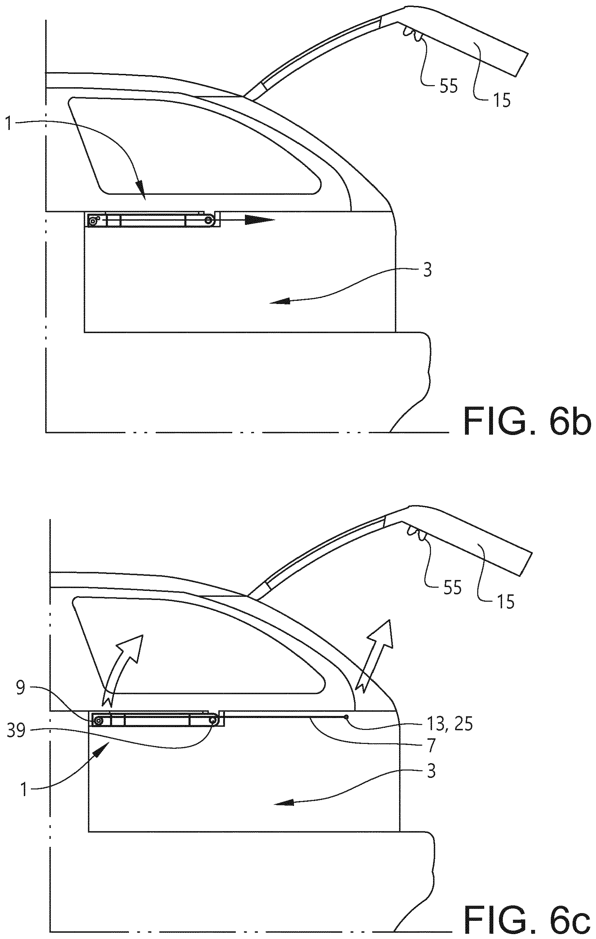

The load cover arrangement 1 is placed in the desired position in the side walls 19, 23, see Figure 6b. For the illustrated embodiment of the load cover arrangement 1, the pivots 39, 43 are inserted into the respective pivot receptacle 45, 47 located at the side walls 19, 23 of the cargo space 3, see also Figure 4. The first end portions 33, 35 of the arms 29, 31 and/or the first and second end pieces 27a, 27b are positioned to abut the first and second supports 51, 53, the load cover arrangement 1 thereby being in the first position. Thereafter, the covering 7 is pulled out rearwards in the vehicle 5, illustrated by an arrow in Figure 6b.

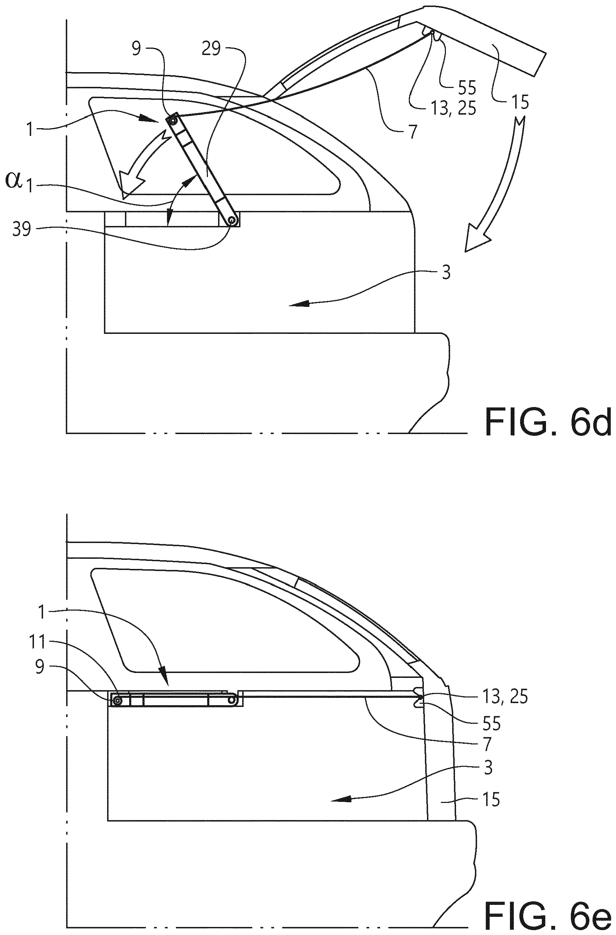

When the covering 7 has been pulled out to the desired length, the bar 25 at the distal end portion 25 is attached to the attachment 55 at the tailgate 15. See Figures 6c and 6d. Thereby the arms 29, 31 are rotated about their respective pivots 39, 43 by the angle α₁ up to the second position, see also Figure 4.

In the second position of the load cover arrangement 1, see Figure 6d, the cargo is loaded into the cargo space 3. A person standing behind the vehicle will not be obstructed by the covering 7. There is further a free view into the passenger compartment of the vehicle 5 and further out through the windscreen.

When loading is finished, the tailgate 15 is closed. Thereby, the arms 29, 31 move back to the first position of the load cover arrangement 1 again by means of gravity and/or by being spring-biased. See arrows in Figure 6d. The distal end portion 13 of the covering 7 remains attached to the tailgate 15 by means of the attachment 55, thereby retaining the covering 7 in a position wherein the covering 7 covers the cargo in the cargo space 3, see Figure 6e.

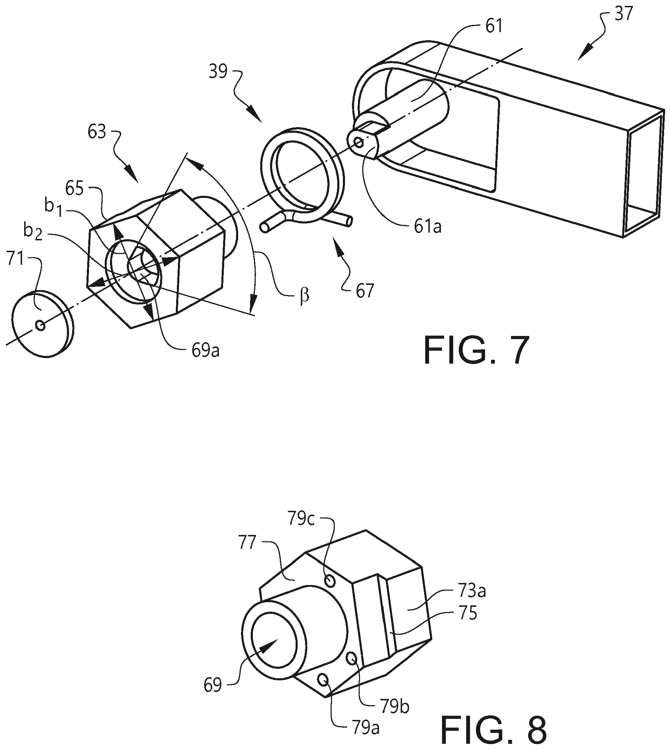

Figure 7 illustrates in an exploded view one of the pivots 39 and its connection to the second end portion 37 of the arm in greater detail, here illustrated for the first arm 29, although there is a corresponding arrangement for the second arm 31. The pivot 39 comprises a rotation axis 61, which is connected to the second end portion 37. The rotation axis 61 may be attached to the second end portion 37 or form an integral unit with the second end portion 37. The pivot 39 further comprises an attachment portion in the form of an attachment nut 63, see also Figure 8. The attachment nut 63 has a polygonally shaped head, here a hexagonally shaped head 65. The head 65 has a smallest cross-sectional extension b₁ and a largest cross-section extension b₂, both extensions being measured through the central axis of the attachment nut 63.

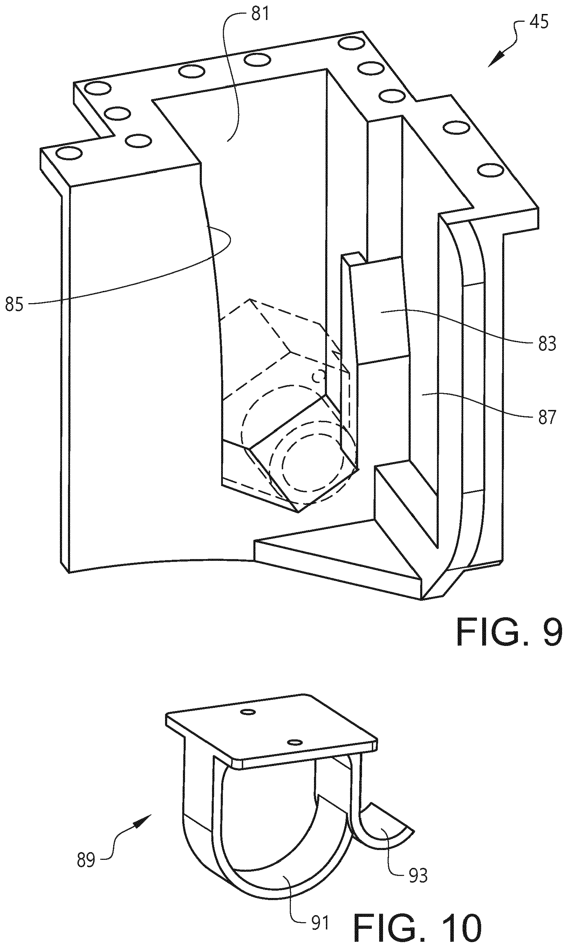

The head 65 is shaped to slide easily into the pivot receptacle 45 when inserted from above. The pivot receptacle 45 is thus shaped such that it allows easy insertion of the head 65 from above, but prevents rotation of the head 65. Therefore the pivot receptacle 45 has a width which is less than the largest cross-section extension b₂ but larger than the smallest cross-sectional extension b₁, preferably being slightly larger than the smallest cross-sectional extension b₁, which is further explained below in conjunction with Figure 9.

A spring, illustrated as a torsion spring 67 is provided for controlling the rotational position of the arms 29 in relation to attachment nut 63, which is attached in the pivot receptacle 45 of the cargo space 3. The spring 67 biases the first arm 29 to a horizontal position, thereby biasing the load cover arrangement 1 to the first position.

The rotation axis 61 is insertable into a bore 69 in the head 65 of the attachment nut 63. In the illustrated embodiment, the bore 69 is shown as through-going and covered by a washer 71, but it may as well form a cavity in the attachment nut 63. The cross-section of the bore 69 forms a portion of a circle at an end portion 69a facing away from the first arm 29. The opening angle β of this portion corresponds to the rotation angles α₁, α₂ of the first and second arms 29, 31 mentioned above, see Figures 4 and 5. The tip portion 61a of the rotation axis 61 has a flat shape, such that it controls the rotation angle of the first arm 29 by being rotated within the opening angle β. Hence, the stopper mentioned above in conjunction with the rotation of the arms is in this embodiment provided by the cross-sectional shape of the end portion 69a of the bore 69 and the flat shape of the tip portion 61a of the rotation axis 61. The rest of the rotation axis 61 has a circular cross-section providing a smooth rotation in the bore 69, which has a corresponding circular cross-section, except for at the above-mentioned tip portion 69a.

Since the head 65 of the attachment nut 63 is polygonal, it has a number of side surfaces. At least one of the side surfaces 73a is provided with a shape element, illustrated as a step 75. See Figure 8. The shape element 75 helps to retain the attachment nut 63 in the pivot receptacle 45, such that the attachment nut 63 may only be inserted into or released from the pivot receptacle 45 in a vertical direction.

A bottom side 77 of the head 65, i.e. the side facing towards the cargo space, is provided with at least one hole 79a, 79b, 79c for receiving one end of the torsion spring 67. By providing a plurality of holes as is illustrated, an appropriate tensioning of the torsion spring 67 may be selected, but one hole would be enough.

Figure 9 illustrates the pivot receptacle 45, which comprises a cavity 81, which is open from above and from the side. Although the pivot receptacle 45 is illustrated as a separate part attached to the side wall, it would also be feasible that the pivot receptacle would be integrated with the side wall, e.g. moulded as a single unit. A wall of the cavity 81 comprises a protrusion 83, which cooperates with the shape element 75 of the attachment nut 63 to retain the attachment nut 63 in the pivot receptacle 45, such that the attachment nut 63 may only be inserted into or released from the pivot receptacle 45 in a vertical direction.

Preferably and as is illustrated, a side wall 85 of the cavity 81 is shaped such that the cavity 81 is wider as its entrance opening than at its bottom. This helps to guide the attachment nut 63 when mounting it. The wider entrance opening gives some tolerance when inserting the attachment nut 63 into the cavity 81, while the side wall 65 at the bottom is shaped to hold the attachment nut 63 in a fixed way, such that it cannot rotate. Hence, the bottom of the cavity 81 is shaped, such that it has a complementary shape to that of the attachment nut 63.

An outer cavity 87 is provided, which is configured to receive the second end portion 37 of the first arm. The second end portion 37 has a rounded end, which allows the second end portion 37 to rotate in relation to the attachment nut 63.

Figure 10 illustrates a handle 89, which is to be attached to the underside of the covering 7 close to its distal end portion 13. A ring 91 provides a good grip for a user when pulling out the covering 7.

As an option, the handle 89 may be provided with a hook 93, which is adapted to cooperate with the second shaft 49, see Figures 1a and 1b. When the covering is rolled in, the hook 93 will eventually hook on to the second shaft 49 and will thereby control how far the covering 7 is rolled in. Thereby, the covering 7 can be pre-tensioned by means of the one or more internal springs in the take-up shaft 9.

As such, the present invention should not be considered as limited by the embodiments and figures described herein.

## Claims

1. A load cover arrangement (1) for a cargo space (3) of a vehicle (5), said cargo space (3) comprising a side wall (19, 23) at either side of said cargo space (3), said load cover arrangement (1) comprising
- a covering (7) for covering objects in said cargo space (3),
- a take-up shaft (9) for receiving at least part of said covering (7), said take-up shaft (9) having a first end (17) and a second end (21), a proximal end portion (11) of said covering (7) being attached to, or attachable to said take-up shaft (9),
**characterized in that**
said load cover arrangement (1) further comprises
- a first arm (29) and a second arm (31), each arm (29, 31) having a first (33, 35) and a second (37, 41) end portion,
- a first pivot (39) and a second pivot (43), which are adapted to be attached to said vehicle (5) at said side walls (19, 23) of said cargo space (3), said first and second pivots (39, 43) allowing said first and second arms (29, 31) to rotate in relation to said cargo space (3) from a first position, wherein said first and second arms (29, 31) are horizontal or substantially horizontal, corresponding to a closed tailgate (15) of said vehicle (5), to a second position corresponding to an open tailgate (15), wherein said first and second arms (29, 31) have been rotated by an angle α, such that said covering (7) is able to follow the displacement of said tailgate (15),
wherein said first end portion (33) of said first arm (29) is connected to, or connectable to, said first end (17) of said take-up shaft (9) and said second end portion (37) of said first arm (29) is connected to, or connectable to said first pivot (39), and said first end portion (35) of said second arm (31) is connected to, or connectable to, said second end (21) of said take-up shaft (9) and said second end portion (41) of said second arm (31) is connected to, or connectable to said second pivot (43).

2. The load cover arrangement (1) according to claim 1, wherein said second end portions (37, 41) of said first and second arms (29, 31) are connected to, or connectable to, said ends (17, 21) of said take-up shaft (9) by means of a respective hinged connection.

3. The load cover arrangement (1) according to claim 2, wherein said first and second arms (29, 31) are transitable by means of said respective hinged connections between an operating position, in which said first and second arms (29, 31) are perpendicular, or substantially perpendicular, to said take-up shaft (9), and a storage position, in which said first and second arms (29, 31) are parallel, or substantially parallel, to said take-up shaft (9).

4. The load cover arrangement (1) according to any one of the preceding claims, wherein said first and second arms (29, 31) have a respective length (l₁, l₂) being in the range of from 10 cm to 70 cm, preferably in the range of from 15 cm to 60 cm, more preferably in the range of from 20 cm to 50 cm.

5. The load cover arrangement (1) according to any one of the preceding claims, wherein said first and second arms (29, 31) have adjustable lengths (l₁, l₂).

6. The load cover arrangement (1) according to any one of the preceding claims, wherein said covering (7) is rollable or pliable, preferably a main portion or more preferably all, or substantially all, of said covering (7), is rollable or pliable.

7. The load cover arrangement (1) according to claim 6, when said covering (7) is rollable, said load cover arrangement (1) further comprising
- a first end piece (27a), located at said first end (17) of said take-up shaft (9),
- a second end piece (27b), located at said second end (21) of said take-up shaft (9),
said take-up shaft (9) being rotatably suspended in said first end piece (27a) and said second end piece (27b),
said first end portion (33) of said first arm (29) being connected to, or connectable to, said first end (17) of said take-up shaft (9) via said first end piece (27a), and said first end portion (35) of said second arm (31) being connected to, or connectable to, said second end (21) of said take-up shaft (9) via said second end piece (27b).

8. The load cover arrangement (1) according to any one of the preceding claims, wherein said load cover arrangement (1) further comprises a bar (25) or an end board, a distal end portion (13) of said covering (7), which is opposite to said proximal end portion (11), being attached to, or attachable to, said bar (25) or end board.

9. The load cover arrangement (1) according to any one of the preceding claims further comprising a second shaft (49) being parallel to said take-up shaft (9) and located at a c-c distance d from said take-up shaft (9) wherein 2 cm < d < 10 cm, preferably 3 cm < d < 9 cm , more preferably 5 cm < d < 7 cm.

10. The load cover arrangement (1) according to any one of the preceding claims comprising a first support (51) for abutment of said first arm (29) and/or a second support (53) for abutment of said second arm (31).

11. A vehicle (5) comprising a cargo space (3), a tailgate (15) and a load cover arrangement (1) according to any one of the preceding claims, said tailgate (15) comprising at least one attachment (55, 59) for receiving a distal end portion (13) of said covering (7), said cargo space (3) comprising a side wall (19, 23) at either side of said cargo space (3), said load cover arrangement (1) being adapted to be mounted to said side walls (19, 23) by said first pivot (39) and said second pivot (43) being adapted to be attached to said side walls (19, 23) said first and second pivots (39, 43) allowing said first and second arms (29, 31) to rotate in relation to said cargo space (3) from a first position, wherein said first and second arms (29, 31) are horizontal or substantially horizontal, corresponding to a closed tailgate (15) of said vehicle (5), to a second position corresponding to an open tailgate (15), wherein said first and second arms (29, 31) have been rotated by an angle α, such that said covering (7) is able to follow the displacement of said tailgate (15).

12. The vehicle (5) according to claim 11, wherein said first (39) and/or second pivot (43) is fixedly attached to or comprised in said side wall (19, 23) of said cargo space (3).

13. The vehicle (5) according to claim 11, wherein said first (39) and second pivot (43) are rotatably connected to said first and second arms (29, 31) and said side wall (19, 23) of said cargo space (3) comprises a respective pivot receptacle (45, 47) for receiving said first (39) and/or second (43) pivot.

14. The vehicle (5) according to any one of claims 11-13 when dependent on claim 10, wherein said first support (51) and/or a second support (53) is fixedly attached to or comprised in said side wall (19, 23) of said cargo space (3).

## Patentansprüche

1. Ladungsabdeckungsanordnung (1) für einen Laderaum (3) eines Fahrzeugs (5), wobei der Laderaum (3) eine Seitenwand (19, 23) auf beiden Seiten des Laderaums (3) umfasst, wobei die Ladungsabdeckungsanordnung (1) Folgendes umfasst:
- eine Abdeckung (7), um Gegenstände im Laderaum (3) abzudecken,
- eine Aufnahmewelle (9), um zumindest einen Teil der Abdeckung (7) aufzunehmen, wobei die Aufnahmewelle (9) ein erstes Ende (17) und ein zweites Ende (21) aufweist, wobei ein proximaler Endabschnitt (11) der Abdeckung (7) an der Aufnahmewelle (9) befestigt ist oder befestigbar ist, **dadurch gekennzeichnet, dass** die Ladungsabdeckungsanordnung (1) ferner Folgendes umfasst:
- einen ersten Arm (29) und einen zweiten Arm (31), wobei jeder Arm (29, 31) einen ersten (33, 35) und einen zweiten (37, 41) Endabschnitt aufweist,
- ein erstes Drehgelenk (39) und ein zweites Drehgelenk (43), die dazu eingerichtet sind, an den Seitenwänden (19, 23) des Laderaums (3) am Fahrzeug (5) befestigt zu werden, wobei das erste und zweite Drehgelenk (39, 43) zulassen, dass sich der erste und zweite Arm (29, 31) in Bezug zum Laderaum (3) aus einer ersten Stellung, in der der erste und zweite Arm (29, 31) horizontal oder im Wesentlichen horizontal sind, was einer geschlossenen Heckklappe (15) des Fahrzeugs (5) entspricht, in eine zweite Stellung, die einer geöffneten Heckklappe (15) entspricht, drehen, wobei der erste und zweite Arm (29, 31) in einem Winkel α gedreht wurden, sodass die Abdeckung (7) der Verschiebung der Heckklappe (15) folgen kann,
wobei der erste Endabschnitt (33) des ersten Arms (29) mit dem ersten Ende (17) der Aufnahmewelle (9) verbunden oder verbindbar ist und der zweite Endabschnitt (37) des ersten Arms (29) mit dem ersten Drehgelenk (39) verbunden oder verbindbar ist und der erste Endabschnitt (35) des zweite Arms (31) mit dem zweiten Ende (21) der Aufnahmewelle (9) verbunden oder verbindbar ist und der zweite Endabschnitt (41) des zweiten Arms (31) mit dem zweiten Drehgelenk (43) verbunden oder verbindbar ist.

2. Ladungsabdeckungsanordnung (1) nach Anspruch 1, wobei die zweiten Endabschnitte (37, 41) des ersten und zweiten Arms (29, 31) mittels einer jeweiligen Scharnierverbindung mit dem Enden (17, 21) der Aufnahmewelle (9) verbunden oder verbindbar sind.

3. Ladungsabdeckungsanordnung (1) nach Anspruch 2, wobei der erste und zweite Arm (29, 31) mittels der jeweiligen Scharnierverbindungen zwischen einer Betriebsstellung, in der der erste und zweite Arm (29, 31) senkrecht oder im Wesentlichen senkrecht zur Aufnahmewelle (9) sind, und einer Lagerstellung, in der der erste und zweite Arm (29, 31) parallel oder im Wesentlichen parallel zur Aufnahmewelle (9) sind, beweglich sind.

4. Ladungsabdeckungsanordnung (1) nach einem der vorstehenden Ansprüche, wobei der erste und zweite Arm (29, 31) eine entsprechende Länge (l₁, l₂) aufweisen, die im Bereich von 10 cm bis 70 cm, vorzugsweise im Bereich von 15 cm bis 60 cm, weiter bevorzugt im Bereich von 20 cm bis 50 cm liegt.

5. Ladungsabdeckungsanordnung (1) nach einem der vorstehenden Ansprüche, wobei der erste und zweite Arm (29, 31) verstellbare Längen (l₁, l₂) aufweisen.

6. Ladungsabdeckungsanordnung (1) nach einem der vorstehenden Ansprüche, wobei die Abdeckung (7) rollbar oder dehnbar ist, wobei vorzugsweise ein Hauptabschnitt oder weiter bevorzugt die gesamte oder im Wesentlichen die gesamte Abdeckung (7) rollbar oder dehnbar ist.

7. Ladungsabdeckungsanordnung (1) nach Anspruch 6, wobei die Abdeckung (7) rollbar ist, wobei die Ladungsabdeckungsanordnung (1) ferner Folgendes umfasst:
- ein erstes Endstück (27a), das sich am ersten Ende (17) der Aufnahmewelle (9) befindet,
- ein zweites Endstück (27b), das sich am zweiten Ende (21) der Aufnahmewelle (9) befindet,
wobei die Aufnahmewelle (9) im ersten Endstück (27a) und im zweiten Endstück (27b) drehbar aufgehängt ist, wobei der erste Endabschnitt (33) des ersten Arms (29) über das erste Endstück (27a) mit dem ersten Ende (17) der Aufnahmewelle (9) verbunden oder verbindbar ist und der erste Endabschnitt (35) des zweiten Arms (31) über das zweite Endstück (27b) mit dem zweiten Ende (21) der Aufnahmewelle (9) verbunden oder verbindbar ist.

8. Ladungsabdeckungsanordnung (1) nach einem der vorstehenden Ansprüche, wobei die Ladungsabdeckungsanordnung (1) ferner eine Schiene (25) oder eine hintere Ladeklappe umfasst, wobei ein distaler Endabschnitt (13) der Abdeckung (7), der dem proximalen Endabschnitt (11) entgegengesetzt ist, an der Schiene (25) oder der hinteren Ladeklappe befestigt oder befestigbar ist.

9. Ladungsabdeckungsanordnung (1) nach einem der vorstehenden Ansprüche, ferner eine zweite Welle (49) umfassend, die parallel zur Aufnahmewelle (9) ist und sich in einem Mittenabstand d von der Aufnahmewelle (9) befindet, wobei 2 cm < d < 10 cm, vorzugsweise 3 cm < d < 9 cm, weiter bevorzugt 5 cm < d < 7 cm gilt.

10. Ladungsabdeckungsanordnung (1) nach einem der vorstehenden Ansprüche, einen ersten Träger (51) für den Anschlag des ersten Arms (29) und/oder einen zweiten Träger (53) für den Anschlag des zweiten Arms (31) umfassend.

11. Fahrzeug (5), das einen Laderaum (3), eine Heckklappe (15) und eine Ladungsabdeckungsanordnung (1) nach einem der vorstehenden Ansprüche umfasst, wobei die Heckklappe (15) mindestens ein Anbauteil (55, 59) zur Aufnahme eines distalen Endabschnitts (13) der Abdeckung (7) umfasst, wobei der Laderaum (3) eine Seitenwand (19, 23) an beiden Seiten des Laderaums (3) umfasst, wobei die Ladungsabdeckungsanordnung (1) dazu eingerichtet ist, mittels des ersten Drehgelenks (39) und des zweiten Drehgelenks (43) an den Seitenwänden (19, 23) montiert zu werden, die dazu eingerichtet sind, an den Seitenwänden (19, 23) befestigt zu werden, wobei das erste und zweite Drehgelenk (39, 43) zulassen, dass sich der erste und zweite Arm (29, 31) in Bezug zum Laderaum (3) aus einer ersten Stellung, in der der erste und zweite Arm (29, 31) horizontal oder im Wesentlichen horizontal sind, was einer geschlossenen Heckklappe (15) des Fahrzeugs (5) entspricht, in eine zweite Stellung, die einer geöffneten Heckklappe (15) entspricht, drehen, wobei der erste und zweite Arm (29, 31) in einem Winkel α gedreht wurden, sodass die Abdeckung (7) der Verschiebung der Heckklappe (15) folgen kann.

12. Fahrzeug (5) nach Anspruch 11, wobei das erste (39) und/oder zweite Drehgelenk (43) in der Seitenwand (19, 23) des Laderaums (3) fest angebracht oder darin enthalten ist/sind.

13. Fahrzeug (5) nach Anspruch 11, wobei das erste (39) und zweite Drehgelenk (43) drehbar mit dem ersten und zweiten Arm (29, 31) verbunden sind und die Seitenwand (19, 23) des Laderaums (3) eine entsprechende Drehzapfenaufnahme (45, 47) zur Aufnahme des ersten (39) und/oder zweiten (43) Drehzapfens umfasst.

14. Fahrzeug (5) nach einem der Ansprüche 11-13, wenn abhängig von Anspruch 10, wobei der erste Träger (51) und/oder der zweite Träger (53) in der Seitenwand (19, 23) des Laderaums (3) fest angebracht oder darin enthalten ist/sind.

## Revendications

1. Agencement de couvercle de charge (1) pour un espace de cargaison (3) d'un véhicule (5), ledit espace de cargaison (3) comprenant une paroi latérale (19, 23) de part et d'autre dudit espace de cargaison (3), ledit agencement de couvercle de charge (1) comprenant
- un recouvrement (7) pour couvrir des objets dans ledit espace de cargaison (3),
- un arbre d'enroulement (9) pour recevoir au moins une partie dudit recouvrement (7), ledit arbre d'enroulement (9) ayant une première extrémité (17) et une deuxième extrémité (21), une portion d'extrémité proximale (11) dudit recouvrement (7) étant ou pouvant être attachée audit arbre d'enroulement (9),
**caractérisé en ce que**
ledit agencement de couvercle de charge (1) comprend en outre
- un premier bras (29) et un deuxième bras (31), chaque bras (29, 31) ayant une première (33, 35) et une deuxième (37, 41) portion d'extrémité,
- un premier pivot (39) et un deuxième pivot (43), qui sont prévus pour être attachés audit véhicule (5) au niveau desdites parois latérales (19, 23) dudit espace de cargaison (3), lesdits premier et deuxième pivots (39, 43) permettant auxdits premier et deuxième bras (29, 31) de tourner par rapport audit espace de cargaison (3) d'une première position, où lesdits premier et deuxième bras (29, 31) sont horizontaux ou sensiblement horizontaux, correspondant à un hayon fermé (15) dudit véhicule (5), à une deuxième position correspondant à un hayon ouvert (15), où lesdits premier et deuxième bras (29, 31) ont été tournés d'un angle α, de telle sorte que ledit recouvrement (7) puisse suivre le déplacement dudit hayon (15),
ladite première portion d'extrémité (33) dudit premier bras (29) étant ou pouvant être connectée à ladite première extrémité (17) dudit arbre d'enroulement (9) et ladite deuxième portion d'extrémité (37) dudit premier bras (29) étant ou pouvant être connectée audit premier pivot (39), et ladite première portion d'extrémité (35) dudit deuxième bras (31) étant ou pouvant être connectée à ladite deuxième extrémité (21) dudit arbre d'enroulement (9) et ladite deuxième portion d'extrémité (41) dudit deuxième bras (31) étant ou pouvant être connectée audit deuxième pivot (43).

2. Agencement de couvercle de charge (1) selon la revendication 1, dans lequel lesdites deuxièmes portions d'extrémité (37, 41) desdits premier et deuxième bras (29, 31) sont ou peuvent être connectées auxdites extrémités (17, 21) dudit arbre d'enroulement (9) au moyen d'une connexion articulée respective.

3. Agencement de couvercle de charge (1) selon la revendication 2, dans lequel lesdits premier et deuxième bras (29, 31) peuvent être déplacés au moyen desdites connexions articulées respectives entre une position fonctionnelle dans laquelle lesdits premier et deuxième bras (29, 31) sont perpendiculaires, ou sensiblement perpendiculaires, audit arbre d'enroulement (9), et une position de rangement dans laquelle lesdits premier et deuxième bras (29, 31) sont parallèles, ou sensiblement parallèles, audit arbre d'enroulement (9).

4. Agencement de couvercle de charge (1) selon l'une quelconque des revendications précédentes, dans lequel lesdits premier et deuxième bras (29, 31) ont une longueur respective (l₁, l₂) dans la plage de 10 cm à 70 cm, de préférence dans la plage de 15 cm à 60 cm, plus préférablement dans la plage de 20 cm à 50 cm.

5. Agencement de couvercle de charge (1) selon l'une quelconque des revendications précédentes, dans lequel lesdits premier et deuxième bras (29, 31) présentent des longueurs ajustables (l₁, l₂).

6. Agencement de couvercle de charge (1) selon l'une quelconque des revendications précédentes, dans lequel ledit recouvrement (7) peut être roulé ou plié, de préférence une portion principale ou plus préférablement la totalité, ou sensiblement la totalité dudit recouvrement (7), peut être roulée ou pliée.

7. Agencement de couvercle de charge (1) selon la revendication 6, dans lequel ledit recouvrement (7) peut être roulé, ledit agencement de couvercle de charge (1) comprenant en outre :
- une première pièce d'extrémité (27a), située au niveau de ladite première extrémité (17) dudit arbre d'enroulement (9),
- une deuxième pièce d'extrémité (27b), située au niveau de ladite deuxième extrémité (21) dudit arbre d'enroulement (9),
ledit arbre d'enroulement (9) étant suspendu de manière rotative dans ladite première pièce d'extrémité (27a) et ladite deuxième pièce d'extrémité (27b),
ladite première portion d'extrémité (33) dudit premier bras (29) étant ou pouvant être connectée à ladite première extrémité (17) dudit arbre d'enroulement (9) par le biais de ladite première pièce d'extrémité (27a), et
ladite première portion d'extrémité (35) dudit deuxième bras (31) étant ou pouvant être connectée à ladite deuxième extrémité (21) dudit arbre d'enroulement (9) par le biais de ladite deuxième pièce d'extrémité (27b).

8. Agencement de couvercle de charge (1) selon l'une quelconque des revendications précédentes, ledit agencement de couvercle de charge (1) comprenant en outre une barre (25) ou une planche d'extrémité, une portion d'extrémité distale (13) dudit recouvrement (7), qui est opposée à ladite portion d'extrémité proximale (11), étant ou pouvant être attachée à ladite barre (25) ou planche d'extrémité.

9. Agencement de couvercle de charge (1) selon l'une quelconque des revendications précédentes, comprenant en outre un deuxième arbre (49) parallèle audit arbre d'enroulement (9) et situé à une distance c-c d dudit arbre d'enroulement (9), 2 cm < d < 10 cm, de préférence 3 cm < d < 9 cm, plus préférablement 5 cm < d < 7 cm.

10. Agencement de couvercle de charge (1) selon l'une quelconque des revendications précédentes, comprenant un premier support (51) pour la venue en butée dudit premier bras (29) et/ou un deuxième support (53) pour la venue en butée dudit deuxième bras (31).

11. Véhicule (5) comprenant un espace de cargaison (3), un hayon (15) et un agencement de couvercle de charge (1) selon l'une quelconque des revendications précédentes, ledit hayon (15) comprenant au moins une fixation (55, 59) pour recevoir une portion d'extrémité distale (13) dudit recouvrement (7), ledit espace de cargaison (3) comprenant une paroi latérale (19, 23) de part et d'autre dudit espace de cargaison (3), ledit agencement de couvercle de charge (1) étant prévu pour être monté sur lesdites parois latérales (19, 23) par le fait que ledit premier pivot (39) et ledit deuxième pivot (43) sont prévus pour être attachés auxdites parois latérales (19, 23), lesdits premier et deuxième pivots (39, 43) permettant auxdits premier et deuxième bras (29, 31) de tourner par rapport audit espace de cargaison (3) depuis une première position, où lesdits premier et deuxième bras (29, 31) sont horizontaux ou sensiblement horizontaux, correspondant à un hayon fermé (15) dudit véhicule (5), à une deuxième position correspondant à un hayon ouvert (15), où lesdits premier et deuxième bras (29, 31) ont été tournés d'un angle α de telle sorte que ledit recouvrement (7) puisse suivre le déplacement dudit hayon (15).

12. Véhicule (5) selon la revendication 11, dans lequel ledit premier (39) et/ou deuxième (43) pivot sont attachés fixement à, ou inclus dans, ladite paroi latérale (19, 23) dudit espace de cargaison (3).

13. Véhicule (5) selon la revendication 11, dans lequel lesdits premier (39) et deuxième (43) pivots sont connectés de manière rotative auxdits premier et deuxième bras (29, 31) et ladite paroi latérale (19, 23) dudit espace de cargaison (3) comprend un réceptacle de pivot respectif (45, 47) pour recevoir ledit premier (39) et/ou deuxième (43) pivot.

14. Véhicule (5) selon l'une quelconque des revendications 11 à 13, lorsqu'elles dépendent de la revendication 10, dans lequel ledit premier support (51) et/ou un deuxième support (53) sont attachés fixement à, ou inclus dans, ladite paroi latérale (19, 23) dudit espace de cargaison (3).
